Europäisches Patentamt

European Patent Office

Office européen des brevets

(11) Publication number: **0 501 136 A2**

# EUROPEAN PATENT APPLICATION

(21) Application number: **92100994.0**

(22) Date of filing: **22.01.92**

(51) Int. Cl.⁵: **G02F 1/136**

(30) Priority: **25.02.91 JP 53374/91**

(43) Date of publication of application:
**02.09.92 Bulletin 92/36**

(84) Designated Contracting States:
**CH DE FR GB LI NL**

(71) Applicant: **SEIKO EPSON CORPORATION**
**4-1, Nishishinjuku 2-chome**
**Shinjuku-ku Tokyo-to(JP)**

(72) Inventor: **Takahashi, Kotoyoshi, c/o Seiko**
**Epson Corporation**
**3-5, Owa 3-chome**
**Suwa-shi, Nagano-ken(JP)**

(74) Representative: **Blumbach Weser Bergen**
**Kramer Zwirner Hoffmann Patentanwälte**
**Radeckestrasse 43**
**W-8000 München 60(DE)**

(54) **Electro-optical device.**

(57) An electro-optical device comprises a pair of substrates (1, 2) with a liquid crystal layer (3) sandwiched therebetween. A counter electrode (4) is positioned on one (1) of the substrates (1, 2) and pixel electrodes (5) and nonlinear elements for driving the pixel electrodes are positioned on the other substrate (2), the nonlinear elements comprising a first conductor (6), an insulator (7a) and a second conductor (8). The capacitance ratio of the capacitance of the pixel electrodes to that of the nonlinear elements is at a value at which the contrast against capacitance ratio characteristic assumes a maximum at normal use temperatures or the surface area ratio of the surface area of the pixel electrodes to that of the nonlinear elements is at a value at which the contrast against surface area ratio characteristic assumes a maximum at normal use temperature. This allows to achieve a good quality electro-optical characteristic or display characteristic without requiring the capacitance of the nonlinear elements to be made extremely small.

FIG. 1

EP 0 501 136 A2

The present invention relates to electro-optical devices used in liquid crystal display devices etc. More particularly, it relates to electro-optical devices in which pixel electrodes and nonlinear elements used for driving the pixel electrodes are positioned on one of a pair of substrates between which a liquid crystal layer is sandwiched.

As an example of such an electro-optical device the following explanation describes a liquid crystal display device in which metal-insulator-metal (MIM) elements are used as the nonlinear elements, i.e., elements having a nonlinear current-voltage characteristic.

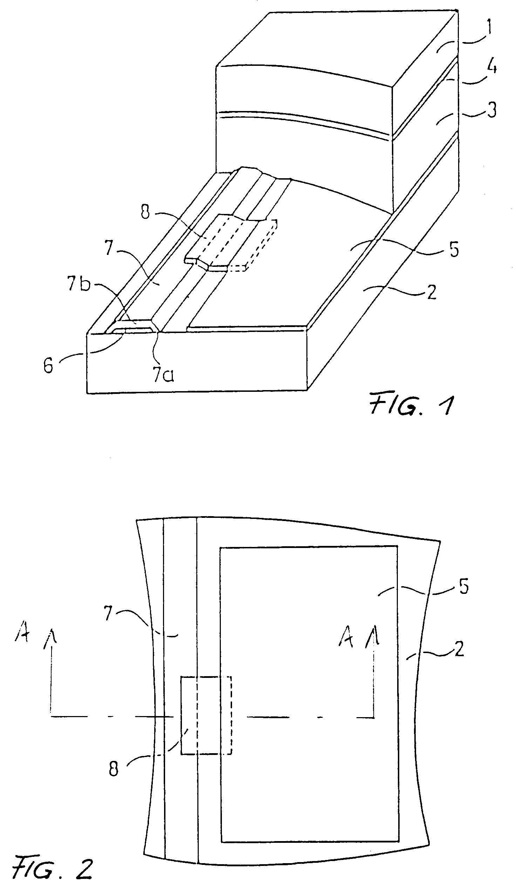

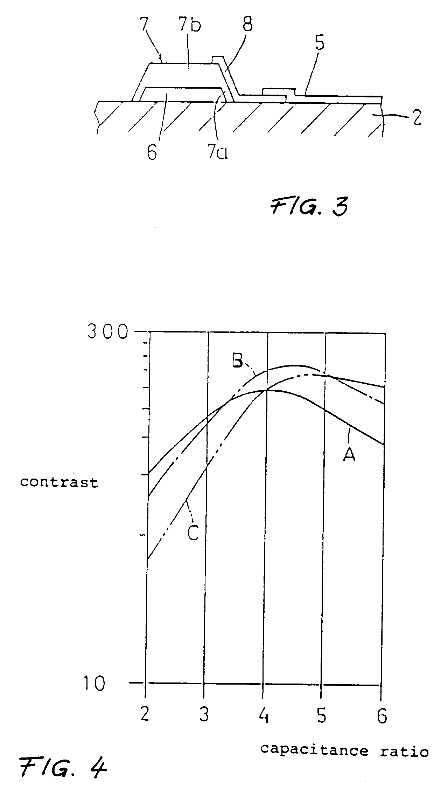

Fig. 1 is a perspective view of a part of this kind of liquid crystal display device, Fig. 2 is a top view of a part of the substrate with an MIM element, and Fig. 3 is an enlarged cross section along line A-A in Fig. 2.

In the figures, 1 and 2 are the two substrates between which the liquid crystal layer 3 is sandwiched. A counter electrode 4 made from ITO, etc., is formed on one of the substrates, namely substrate 1, and a plurality of pixel electrodes 5 made from ITO, etc., is formed in a matrix pattern on the other substrate 2. The MIM elements are formed from a first conductor 6 made from tantalum (Ta), an insulator 7a made from tantalum oxide (TaOx), and a second conductor 8 made from chrome (Cr).

The MIM element shown as an example in the figure has a so-called "lateral MIM" structure in which only one side surface of the first conductor 6 is used for forming the nonlinear MIM element. In this lateral MIM the surface other than the side surfaces of the first conductor 6 is covered with a thick insulator 7b forming a barrier layer. The electrical resistance of this insulator 7b is higher than that of the thin insulator 7a provided on the side surfaces of the first conductor 6. Therefore, the surface covered by the thick insulator 7b does not function as part of an MIM element. This structure allows to provide elements with an extremely small surface area, and it is an effective technology for increasing the density and precision of liquid crystal display devices and other electro-optical devices which utilize this kind of elements.

In electro-optical devices that use MIM elements and other nonlinear elements as described above, when the capacitance of the element is $C_{MIM}$, the capacitance of the pixel driven by the element is $C_{LC}$ and the control voltage V, the voltage $V_{MIM}$ impressed on the MIM element becomes $V_{MIM} = V \cdot C_{LC}/(C_{MIM} + C_{LC})$.

Therefore, assuming $C_{LC}$ to be constant, $C_{MIM}$ must be made small for the MIM element to drive efficiently with respect to the impressed voltage. Generally, it is desirable that $C_{LC}/C_{MIM} \geq 10$.

However, when $C_{MIM}$ is made small (the size of the element is made small), the resistance of the element increases and the effective voltage impressed on the liquid crystal layer falls when a scanning drive is performed.

It is an object of the invention to provide an electro-optical device with good display performance and efficient drive by the nonlinear elements without requiring the capacitance of the elements to be made extremely small.

This object is achieved with an electro-optical device as claimed.

When the capacitance ratio between the pixel capacitance, i.e. the capacitance between the pixel electrodes, to the element capacitance, i.e. the capacitance of those parts from among the overlapping parts of the first conductor, the insulator and the second conductor, that become the nonlinear element for driving the pixel electrode, is changed, a maximum contrast will be observed at a certain capacitance ratio. By setting the capacitance ratio at this value, the nonlinear element can be caused to drive efficiently without making the capacitance of the element extremely small, thus making it possible to obtain electro-optical display devices with good display performance.

For example, when the first conductor, the insulator and the second conductor are made from tantalum, tantalum oxide and chrome, respectively, the above defined capacitance ratio should be set between 2 and 8.

The above capacitance ratio can be replaced with the surface area ratio of the pixel electrodes to the nonlinear elements. Taking the above-mentioned example, this surface area ratio should be set between 1000 and 4000.

Embodiments of the invention will be described in detail below with reference to the drawings, in which

Fig. 1    is a perspective view showing an example of an electro-optical device according to the invention,

Fig. 2    is a top view of the element substrate,

Fig. 3    is an enlarged cross section along the line A-A in Fig. 2, and

Fig. 4    is a graph showing the contrast against the capacitance ratio.

The invention will be explained below with respect to a liquid crystal display device in which MIM elements are used as nonlinear elements.

Generally, when MIM elements or other nonlinear two-terminal elements are used to drive pixels of a liquid crystal display device, the above defined capacitance ratio or surface area ratio is an important factor and has to be set to a prescribed value.

For example, the ratio $C_{LC}/C_{MIM}$ of the pixel capacitance $C_{LC}$ to the MIM element capacitance $C_{MIM}$ should generally be set to 10 or greater in the prior art as described above, but good display can be obtained without actually setting it to 10 or greater.

More specifically, in a case in which the first conductor, the insulator and the second conductor, which make up the MIM elements, are made from tantalum (Ta), tantalum oxide (TaOx) and chrome (Cr), respectively, and the relative dielectric constant and film thickness of the tantalum oxide are set to 27 and 60 nm, respectively, the capacitance ratio may be set to a value between 2 and 8. The reason for this will be explained below.

When the pixel capacitance is kept constant and the element capacitance is made so large as to result in a capacitance ratio smaller than 2, then a large writing current flows when the pixel is selected and a sufficient potential can be supplied to the pixel electrode. However, when the pixel is not selected, a large leakage current occurs making it impossible to maintain a sufficient potential at the pixel electrode. Therefore, the combined effective voltage when the pixel is selected and when it is not selected falls as the capacitance ratio becomes smaller.

On the other hand, if the capacitance of the element is made small to result in a large capacitance ratio, then the leakage current, when the pixel is not selected, is small allowing to maintain a sufficient potential at the pixel. However, a large writing current cannot be achieved when the pixel is selected, and so a sufficient potential cannot be supplied to the pixel electrode. Therefore, the combined effective voltage when the pixel is selected and when it is not selected falls as the capacitance ratio becomes larger.

For the above reasons, there is an optimum capacitance ratio and it was found out that there is a capacitance ratio at which the rate of change in the effective voltage of the pixel becomes zero with respect to small increments and decrements of this capacitance ratio. Specifically, the capacitance ratio at which the rate of change in the effective voltage becomes zero under the above conditions is approximately 4. A good display can be obtained by setting the capacitance ratio between 2 and 8 or, more desirably, between 3.5 and 5.5.

Fig. 4 shows the contrast ratio of transmitted light (in ON condition and OFF condition) against the capacitance ratio in the liquid crystal display device of Figs. 1 to 3, in which the first conductor, the insulator and the second conductor, which make up the MIM element, are made from tantalum, tantalum oxide and chrome, respectively, the relative dielectric constant and film thickness of the tantalum oxide are set to 27 and 60 nm, respectively, and a liquid crystal layer (approximately 5 μm thick) is sandwiched between the opposing substrates. It can be seen from the figure that a good contrast can be obtained at a capacitance ratio of approximately 4. The same results are obtained when the relative dielectric constant and the film thickness of the tantalum oxide are slightly changed.

In Fig. 4, the graphs A, B and C show the contrast at $0°C$, $25°C$ and $50°C$, respectively. Comparing these graphs reveals that the capacitance ratio at which the contrast takes a maximum is not greatly affected by temperature changes within the normal-use temperature range of $0°$ to $50°C$. Thus, a consistently high contrast display can be obtained by setting the capacitance ratio to conditions such as those described above.

As mentioned before, the capacitance ratio can be directly replaced by the surface area ratio, i.e. the surface area of the pixel electrode to the surface area of the nonlinear element (referred to as "drive area ratio" below).

For example, when tantalum, tantalum oxide and chrome are used as the first conductor, the insulator and the second conductor, respectively, of the MIM element in a liquid crystal display device set to the same conditions as above, a capacitance ratio of 2 to 8 is equivalent to a drive area ratio of 1000 to 4000. Therefore, when the capacitance ratio of the liquid crystal or the nonlinear element is changed, the drive area ratio should be set to between 1000 and 4000 or, more desirably, 1700 and 2800.

The characteristic of nonlinear elements typified by MIM elements is dependent on the Schottky effect or the Pool-Frenkel effect. The current density j is expressed by

$$j = kVe^{(\beta \sqrt{V})} \qquad (1)$$

with
   V:     voltage

$$\beta = 1/\alpha KT(q^3/\pi \epsilon_r \epsilon_o d)^{1/2} \qquad (2)$$

$$k = \eta \mu q/de^{(-\Phi/\alpha KT)} \qquad (3)$$

| | |
|---|---|
| $\epsilon_r$: | relative dielectric constant of insulator |
| $\epsilon_o$: | absolute dielectric constant of insulator |
| d: | film thickness of insulator |
| K: | Boltzmann's constant |
| T: | absolute temperature |
| q: | electron charge |
| $\eta$: | electron concentration |
| $\mu$: | mobility |
| $\alpha = 1$: | Pool-Frenkel |
| $\alpha = 2$: | Schottky |

For example, in the case of an MIM element made from tantalum, tantalum oxide (film thickness: 60 nm, relative dielectric constant: 27) and chrome, a value of 4 to 8 for $\beta$, which indicates the steepness of the nonlinear element, is obtained from equation (2).

Further, the element capacitance $C_{LC}$ in this case is

$$C_{LC} = \epsilon_r \epsilon_o S/d \qquad (4)$$

$S$:    element surface area
and the element capacitance is regulated by the element surface area.

When these MIM elements are used in liquid crystal optical devices, the capacitance ratio $C_{LC}/C_{MIM}$ of the pixel capacitance $C_{LC}$ and the element capacitance $C_{MIM}$ has an optimum value for best display performance (contrast, gradation reproduction, etc.) as described above. The capacitance ratio in that case is approximately 4 (the drive area ratio about 2000). Since $C_{LC}$ is dependent on the element surface area $S$, the average I' of the optimum current during writing (average voltage $V_{ON}$ impressed on the element), when the element surface area at which the capacitance ratio becomes optimal is S', is expressed as

$$I' = j (V_{ON}) S' \qquad (5)$$

from equation (1).

Since j rises according to equation (1), assuming $\beta$ has increased, then according to equation (5) the optimum element surface area S' or the average voltage $V_{ON}$ impressed on the element must be small in order to obtain the optimum current average I'.

Also, since the steepness $\beta$ of the element is

$$\beta = \sqrt{(1/\epsilon_r d)} \qquad (6)$$

the optimum element size fluctuates due to changes in the relative dielectric constant $\epsilon_r$ or film thickness d of the insulator of the nonlinear element.

In the examples explained with respect to the figures, a lateral MIM was used, but the invention is not limited to MIM elements. Further, an embodiment has been explained in which tantalum, tantalum oxide and chrome were used as the first conductor, the insulator and the second conductor making up the MIM element. However, regardless of the materials used, as long as they are suitable, the same effect can be obtained by setting the capacitance ratio or the drive area ratio to a value at which the contrast against capacitance ratio or drive area ratio characteristic exhibits a maximum.

In addition, the explained embodiment was based on a liquid crystal display device as an example. However, the invention is also applicable to other types of liquid crystal devices and other electro-optical devices.

**Claims**

1.  An electro-optical device comprising a pair of substrates (1, 2) with a liquid crystal layer (3) sandwiched therebetween, in which a counter electrode (4) is positioned on one (1) of the substrates (1, 2) and pixel electrodes (5) and nonlinear elements for driving the pixel electrodes are positioned on the other substrate (2), the nonlinear elements comprising a first conductor (6), an insulator (7a) and a second conductor (8), wherein the capacitance ratio of the capacitance of the pixel electrodes to that of the nonlinear elements is at a value at which the contrast against capacitance ratio characteristic assumes a maximum at normal use temperatures.

2.  The device of claim 1, wherein the first conductor (6), the insulator (7a) and the second conductor (8) are made from tantalum, tantalum oxide and chrome, respectively, and the capacitance ratio is between 2 and 8.

3.  An electro-optical device comprising a pair of substrates (1, 2) with a liquid crystal layer (3) sandwiched therebetween, in which a counter electrode (4) is positioned on one (1) of the substrates (1, 2) and pixel electrodes (5) and nonlinear elements for driving the pixel electrodes are positioned on the other substrate (2), the nonlinear elements comprising a first conductor (6), an insulator (7a) and a second conductor (8), wherein the surface area ratio of the surface area of the pixel electrodes to that of the nonlinear elements is at a value at which the contrast against surface area ratio characteristic assumes a maximum at normal use temperatures.

4.  A device of claim 3, wherein the first conductor (6), the insulator (7a) and the second conductor (8) are made from tantalum, tantalum oxide and chrome, respectively, and the surface area ratio is between 1000 and 4000.

FIG. 1

FIG. 2

5

FIG. 3

contrast

capacitance ratio

FIG. 4